# EUROPEAN PATENT SPECIFICATION

(11) **EP 4 488 841 B1**
(45) Date of publication and mention of the grant of the patent: **25.03.2026**
(21) Application number: 23795567.9
(22) Date of filing: 27.04.2023
(51) Int. Cl.: G06F 13/38, G06F 13/42

(54) **SERVER AND SERVER MANAGEMENT SYSTEM THEREFOR**
SERVER UND SERVERVERWALTUNGSSYSTEM DAFÜR
SERVEUR ET SYSTÈME DE GESTION DE SERVEUR ASSOCIÉ

(30) Priority: 29.04.2022 CN 202210466930
(43) Date of publication of application: 08.01.2025
(73) Proprietor: Suzhou Metabrain Intelligent Technology Co., Ltd., Suzhou, Jiangsu 215000 (CN)
(72) Inventor: TIAN, Shuo, Suzhou, Jiangsu 215000 (CN)
(74) Representative: Viering, Jentschura & Partner mbB Patent- und Rechtsanwälte
(86) International application number: PCT/CN2023/091301
(87) International publication number: WO 2023/208135

(56) References cited:
- WO-A1-2022/083204
- CN-A- 109 947 682
- CN-A- 109 992 555
- CN-A- 110 908 475
- CN-A- 113 608 934
- CN-A- 114 721 992

## Description

### TECHNICAL FIELD

The present disclosure relates to the field of servers, and in particular to a server management system and a server.

### BACKGROUND

In the past, the server management unit has been included in the server mainboard. Modularizing the server management unit and separating it from the mainboard of the server have obvious advantages. With the continuous updating and iteration of CPU technology for the server, server applications are constantly being innovated. In the future, the integration of the central processing unit (CPU) Southbridge chip and the CPU will result in the removal of low-speed interfaces such as the universal serial bus (USB). The CPU partitioning application enables two CPUs to run the operating system separately. CN 113 608 934 A is disclosing a dual-redundancy server comprising a universal serial bus (USB) controller, an Ethernet controller and a baseboard management controller (BMC) that are connected with a switch through peripheral component interconnect express (PCIE) interfaces.

### SUMMARY

The objective of the present application is to provide a server management system. The server management system in the present application may be applied to a future solution of the CPU partitioning application without the USB interface, and has a simple structure and strong stability. Another objective of the present application is to provide a server including the above server management system. The server management system in the present application may be applied to a future solution of the CPU partitioning application without the USB interface, and has a simple structure and strong stability.

In order to solve the above technical problem, the present application provides a server management system, including:
a gating switch (3);
a first USB interface (4);
two CPUs of a server;
a baseboard management control apparatus configured for receiving a peripheral component interconnect express (PCIe) signal sent by one of the two CPUs through the gating switch, sending a keyboard and mouse instruction received through a first USB interface to the one of the two CPUs connected to the gating switch. Connected CPU, and assisting the one of the two CPUs connected to the gating switch in startup;
a USB controller connected to the baseboard management control apparatus and configured for performing mutual conversion between a USB signal and a PCIe signal, so that communication between the one of the two CPUs connected to the gating switch and the first USB interface is implemented;
the gating switch connected to the two CPUs, the baseboard management control apparatus and the USB controller respectively, and configured for connecting a set of PCIe signals of a designated one of the two CPUs to the baseboard management control apparatus and connecting the other set of PCIe signals to the USB controller; and
the first USB interface connected to the baseboard management control apparatus and the USB controller respectively,
the baseboard management control apparatus includes:
   a baseboard management controller (BMC) connected to an enhanced serial peripheral interface (ESPI) of one of the CPUs and configured for receiving the PCIe signal sent by the one of the two CPUs through the gating switch, sending the keyboard and mouse instruction received through the first USB interface to the one of the two CPUs connected to the gating switch, and receiving startup information sent by one of the two CPUs through its own enhanced serial peripheral interface;
   a control module connected to the baseboard management controller, an enhanced serial peripheral interface of the other of the two CPUs and the gating switch respectively, and configured for processing the startup information sent by the other of the two CPUs through the enhanced serial peripheral interface by using a preset program, and controlling a state of the gating switch; and
   a trusted root security management apparatus connected to the two CPUs and the baseboard management controller respectively, and configured for providing a verified startup program for the one of the two CPUs and the baseboard management controller during a power-on phase of the server.

In some embodiments, the server management system further comprises a mainboard, the control module is further connected to a low voltage differential signaling (LVDS) interface of the mainboard;
the control module is further configured for decoupling an LVDS signal coupled from a plurality of designated types of low-speed signals sent by the mainboard and sending it to the baseboard management controller, and decoupling an LDVS signal coupled from a plurality of designated types of low-speed signals sent by the baseboard management controller and sending it to the mainboard.

In some embodiments, the server management system further includes:
a protocol conversion apparatus connected to a universal asynchronous receiver/transmitter (UART) interface of the baseboard management controller and configured for performing conversion between a USB protocol and a UART protocol;
a second USB interface connected to the protocol conversion apparatus; and
the baseboard management controller further configured for outputting a UART signal received from the control module from the UART interface, and sending the UART signal sent by the protocol conversion apparatus to the control module.

In some embodiments, the control module is further connected to an improved inter integrated circuit (I3C) interface of the CPU; and
the control module is further configured for:
connecting an I3C signal of the CPU to the baseboard management controller, so that the baseboard management controller debugs the CPU through the I3C signal.

In some embodiments, the gating switch includes:
a first one-out-of-two PCIe switch with a first terminal connected to first PCIe signal channels of the two CPUs respectively and a second terminal connected to the USB controller, configured for connecting a first PCIe signal of one of the two CPUs to the USB controller under control of the control module;
a second one-out-of-two PCIe switch with a first terminal connected to second PCIe signal channels of the two CPUs respectively and a second terminal connected to the baseboard management controller, configured for connecting a second PCIe signal of one of the two CPUs under the control of the control module; and
a two-out-of-two switch with a first terminal connected to clock signals of the two CPUs respectively and a second terminal connected to the USB controller and the baseboard management controller respectively, configured for sending the clock signals of the two CPUs to the USB controller and the baseboard management controller respectively.

In some embodiments, the server management system further includes a third USB interface connected to the USB controller; and
the USB controller is configured for performing mutual conversion between the USB signal and the PCIe signal, so that communication between the CPU connected to the gating switch and the first USB interface and the third USB interface respectively is implemented.

In some embodiments, the control module is a field programmable gate array.

In some embodiments, the trusted root security management apparatus includes:
a trusted root security management module Cerberus, connected to two CPUs and the baseboard management controller respectively, and configured for providing a verified startup program for the CPUs and the baseboard management controller during a power-on phase of the server;
a first CPU Flash configured for storing a startup program of one of the CPUs;
a second CPU Flash configured for storing a startup program of the other CPU; and
a baseboard management controller Flash configured for storing a startup program of the baseboard management controller.

In order to solve the above technical problem, the present application also provides a server including the above server management system.

The present application provides a server management system. The server management system in the present application may assist two CPUs in startup, may receive PCIe signals sent by the two CPUs for display of the operating system interface, and may also send the received keyboard and mouse instruction to the CPU connected to the gating switch through the USB controller, thereby realizing the keyboard and mouse application. When the USB controller performs mutual conversion between the USB signal and the PCIe signal, the communication between the CPUs connected to the gating switch is implemented through the first USB interface. It may be seen that the present application may be applied to a future solution of CPU partitioning application in which the USB interface is removed, and has a simple structure and strong stability.

The present application also provides a server, which has the same beneficial effects as the above server management system.

### BRIEF DESCRIPTION OF THE DRAWINGS

In order to more clearly illustrate the technical solutions of the embodiments of the present disclosure or the prior art, the figures that are required to describe the embodiments or the prior art may be briefly introduced below. Apparently, the figures that are described below are embodiments of the present disclosure, and a person skilled in the art may obtain other figures according to these figures without paying creative work.
FIG.1 is a schematic structure diagram of a server management system provided in some embodiments of the present application;
FIG. 2 is a schematic structure diagram of an existing server management system;
FIG. 3 is a schematic structure diagram of another server management system provided in some embodiments of the present application.

### DEEMPENNAGEED DESCRIPTION OF THE EMBODIMENTS

The core of the present application is to provide a server management system. The server management system in the present application may be applied to a future solution for the CPU partitioning application without the USB interface. It has a simple structure and strong stability. Another core of the present application is to provide a server including the above server management system. The server management system in the present application may be applied to a future solution for the CPU partitioning application without the USB interface. It has a simple structure and strong stability.

In order to make the objects, the technical solutions and the advantages of the embodiments of the present disclosure clearer, the technical solutions of the embodiments of the present disclosure may be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

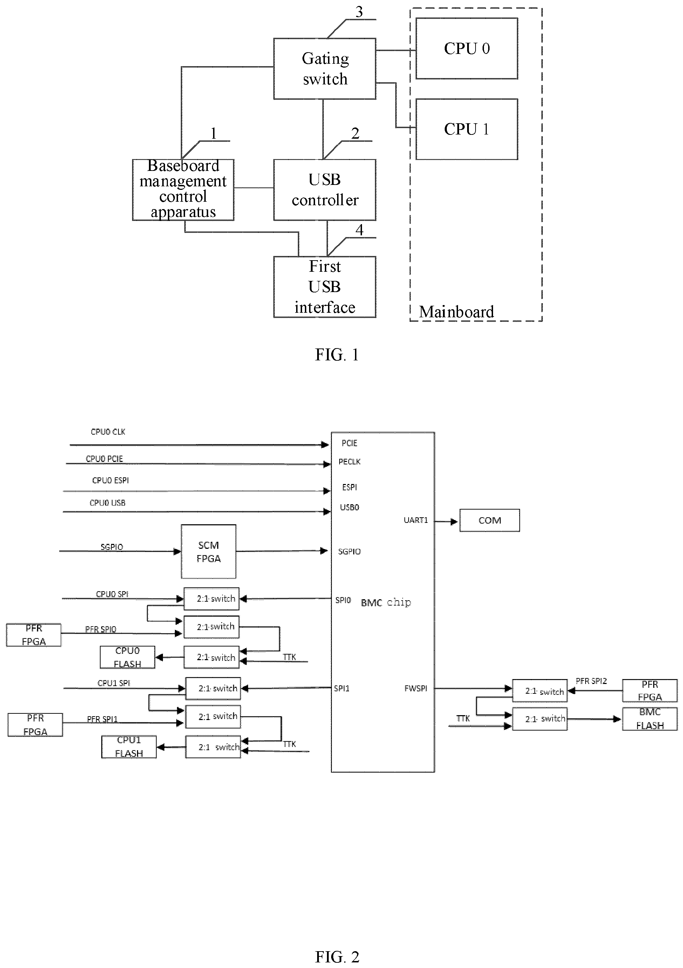

Referring to FIG. 1, FIG. 1 is a schematic structure diagram of a server management system provided in some embodiments of the present application. The server management system includes:
a baseboard management control apparatus 1 configured for receiving a PCIe signal sent by a CPU through a gating switch 3, sending a keyboard and mouse instruction received through a first USB interface 4 to the CPU connected to the gating switch 3, and assisting the CPU connected to the gating switch 3 in startup;
a USB controller 2 connected to the baseboard management control apparatus 1 and configured for performing mutual conversion between a USB signal and the PCIe signal, so that communication between the CPU connected to the gating switch 3 and the first USB interface 4 is implemented;
a gating switch 3 connected to two CPUs of a server, the baseboard management control apparatus 1 and the USB controller 2 respectively and configured for connecting one set of PCIe signals of a designated CPU of the two CPUs to the baseboard management control apparatus 1 and connecting the other set of PCIe signals to the USB controller 2; and
the first USB interface 4 configured for connecting to the baseboard management control apparatus 1 and the USB controller 2 respectively.

Refer to FIG. 2, FIG. 2 is a schematic structure diagram of an existing server management system. The existing 2-way universal server mainboard includes two CPUs, CPU0 and CPU1. Only CPU0 is required to complete separate startup and run the operating system, and CPU1 is mostly configured for extending computing and PCIe resources without running the operating system. CPU1 is booted by CPU0 to complete the startup. The BMC chip is involved in the startup process of CPU0. The PCIe bus of CPU0 is connected to the PCIe controller of the BMC chip for display output of the operating system interface. The ESPI bus of the CPU0 Southbridge chip is connected to the BMC chip to transmit serial port information of CPU0. The USB bus of the CPU0 Southbridge chip is connected to the BMC chip to implement keyboard and mouse applications, etc. The UART interface of the BMC chip is externally connected to a serial COM connector to output serial port information. The BMC is connected to the FPGA through a serial general-purpose input/output (SGPIO) bus, and is connected to the SGPIO bus of the mainboard through the FPGA in this module to implement the IO (Input/Output) interface extension function. The platform firmware resilience (PFR) is a widely used secure boot technology, and is mainly implemented by the FPGA. During the initial power-on stage, the PFR FPGA checks the CPU FLASH, BMC FLASH and other storage units to determine whether the system is in a bootable state. In the existing solution, because CPU0, CPU1 and BMC chips are required to connect to the FLASH, a large number of 2-out-of-1-out logic switches are required for channel gating. In the current PFR solution, the introduction of multiple logic switches greatly increases link branches, thereby resulting in signal integrity risks. The PFR check logic program is redundant and difficult to develop, thereby resulting in a long production and burning time, and greatly reducing production efficiency.

At present, CPU products are updated and iterated rapidly. In the future, the CPU Southbridge chip will be integrated with the CPU, which results in the removal of low-speed interfaces such as the USB. The existing USB solution may not be adapted to a new generation of CPUs. With the increasing demand for reliable operations of low-energy consumption applications in the data center, the concept of CPU partitioning application has been proposed. However, the existing server management solution does not support the CPU partitioning application. The CPU partition application enables two CPUs to run the system separately, and has the following advantages:
1. Meeting the multi-system requirement of the user;
2. 1+1 backup of the operating system. When one way fails, the system may quickly switch to another way;
3. Improving resource utilization. When the user configuration in a single system is not high, the original 2-way server running a single system will cause a waste of the CPU1 resources.

The PFR technology mainly relies on complex logic, and the PFR circuit signal integrity risk is high. These characteristics greatly increase the difficulty of development, production and maintenance. Existing servers may only remotely debug the CPU through the cluster communication port (COM) port or the BMC.

Considering the technical problem in the Background, for the new CPU design (the integration of CPU Southbridge chip and the CPU results in the removal of low-speed interfaces such as the USB, and the CPU partitioning application enables two CPUs to run the operating system separately), since the new generation of CPUs no longer have USB interfaces, the two CPUs (CPU0, CPU1) of the server each have two PCIe buses connected to the new server management system. The gating switch 3 uniformly controls a total of four channels of PCIe buses of the two CPUs. The gating switch 3 connects two PCIe buses of the currently operating CPU to the baseboard management control apparatus 1 and the USB controller respectively.

When the CPU0 is operating, the gating switch 3 connects the two PCIe buses of the CPU0 to the baseboard management control apparatus 1 and the USB controller respectively. The CPU sends the PCIe signal through the PCIe bus connected to the baseboard management control apparatus 1. For example, it may send data related to the operating system interface, so that the baseboard management control apparatus 1 may perform display control of the operating system interface, and the USB controller 2 connected to the first USB interface 4 may perform mutual conversion between the USB signal and the PCIe signal. In this way, the first USB interface 4 performs USB communication with the CPU connected to the gating switch 3 through the USB controller 2.

In order to realize the keyboard and mouse functions of the server, the signals of the keyboard and mouse devices are sent to the baseboard management control apparatus 1 through the first USB interface 4. After processing the keyboard and mouse instructions, the baseboard management control apparatus 1 sends the keyboard and mouse instructions to the CPU connected to gating switch 3 through the USB controller 2 and the gating switch 3, so as to realize the keyboard and mouse application.

The baseboard management control apparatus 1 also assists the CPU connected to the gating switch 3 in startup, which includes providing a verified startup program for the CPU during the startup phase of the server, and receiving startup information sent by the CPU.

Due to the presence of the gating switch 3, the server management system in some embodiments of the present application may also be compatible with existing CPUs, and has strong compatibility and versatility.

The present application provides a server management system. The server management system assists two CPUs in startup, and may receive the PCIe signals sent by two CPUs for the display of the operating system interface. It also sends the received keyboard and mouse commands to the CPU connected to the gating switch through the USB controller, so as to realize the keyboard and mouse application. When the USB controller performs mutual conversion between the USB signal and the PCIe signal, the communication between the CPUs connected to the gating switch may be implemented through the first USB interface. The server management system may be applied to a future solution of the CPU partitioning applications without the USB interface, and has a simple structure and strong stability.

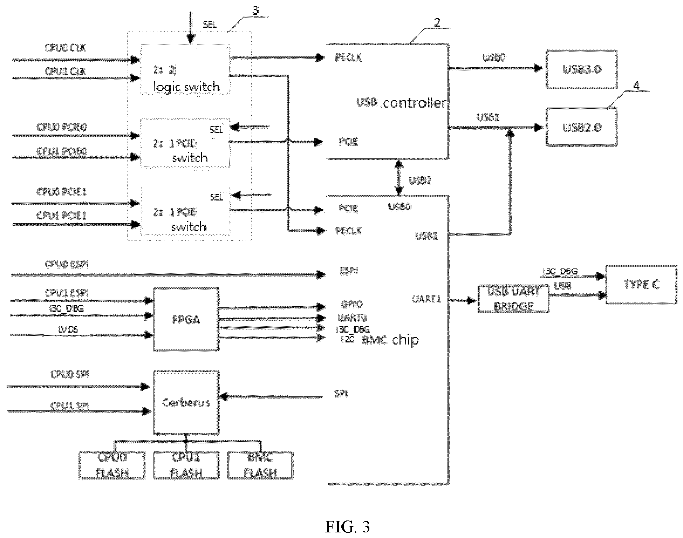

In order to better introduce the embodiments of the present application, please refer to FIG. 3. FIG. 3 is a schematic structure diagram of another server management system provided in some embodiments of the present application. Based on the above embodiments:
in some embodiments, the baseboard management control apparatus 1 includes:
a baseboard management controller BMC connected to the ESPI interface of one of the CPUs and configured for receiving the PCIe signal sent by the CPU through the gating switch 3, sending the keyboard and mouse instruction received through the first USB interface 4 to the CPU connected to the gating switch 3, and receiving startup information sent by one of the CPUs through its own ESPI interface;
a control module connected to the BMC, the ESPI interface of the other CPU and the gating switch 3 respectively, and configured for processing the startup information sent by the other CPU through the ESPI interface by using a preset program, and controlling a state of the gating switch 3; and
a trusted root security management apparatus connected to the two CPUs and the BMC respectively, and is configured for providing a verified startup program for the CPU and the BMC during the power-on phase of the server.

The composition of the BMC, the control module and the trusted root security management module has the advantages of simple structure, low cost and strong stability.

Of course, in addition to the above composition, the baseboard management control apparatus 1 may also be of other compositions.

Considering the existing 2-way server, the CPU0 transmits UART information to the BMC through the ESPI bus and outputs it through the COM interface of the BMC. The ESPI bus speed is high, and the UART bus speed is low. Transmitting UART information by the ESPI greatly reduces the utilization of the ESPI bus. The new server management system has been improved to support the CPU partitioning application. The ESPI mainly runs CPU startup information to improve the efficiency of CPU startup. Since the BMC chip only supports one ESPI interface, in the present application, the ESPI of one of the CPUs (CPU0) may be connected to the ESPI interface of BMC to participate in the startup of the CPU0, and the ESPI of the CPU1 may be connected to the control module to participate in the independent startup of the CPU1 through the control module.

In addition, the control module may also control the state of the gating switch 3. The control module may control the state of the gating switch 3 based on the instruction sent by the BMC.

In some embodiments, the control module is also connected to the LVDS interface of the mainboard.

The control module is also configured for decoupling a low-voltage differential signaling (LVDS) signal coupled from a plurality of designated types of low-speed signals sent by the mainboard and sending it to the BMC, and decoupling an LVDS signal coupled from a plurality of specified types of low-speed signals sent by the BMC and sending it to the mainland.

Due to the introduction of the PCIe bus and ESPI bus of the CPU, the interface between the BMC and the mainboard is inevitably tense. Some low-speed signals, such as I2C, UART and GPIO signals, between the BMC and the mainboard may be logically coupled to the LVDS bus for transmission, and then decoupled through the control module on the mainboard side. Thus, the information interaction between the BMC module and the mainboard is completed by the LVDS bus, which may improve the signal transmission rate and reduce the number of signals for the BMC-mainboard interface.

In some embodiments, the server management system further includes:
a protocol conversion apparatus connected to the UART interface of the BMC and configured for performing conversion between the USB protocol and the UART protocol; and
a second USB interface connected to the protocol conversion apparatus.

The BMC is further configured for outputting the UART signal received from the control module through the UART interface and sending the UART signal sent by the protocol conversion apparatus to the control module.

In the server management system of some embodiments of the present application, the UART signal logically decoupled from the control module is output through the UART interface of the BMC, connected to the second USB interface through the protocol conversion apparatus (UART-to-USB chip, USB UART BRIDGE in FIG. 3), and communicated with the UART signal on the mainboard through the second USB interface.

In some embodiments, the control module is also connected to an I3C interface of the CPU.

The control module is configured for:
connecting an I3C signal of the CPU to the BMC so that the BMC may debug the CPU through the I3C signal.

In order to enable the BMC to debug the CPU through the I3C signal, the control module is also connected to the I3C interface of the CPU, and the control module may connect the I3C signal of the CPU to the BMC, so that the BMC may debug the CPU through the I3C signal.

In addition, it is worth mentioning that the I3C signal of the CPU may also be directly connected to the second USB interface (in this case, the second USB interface may be a TYPEC connector). The serial port information may be debugged through the TYPEC interface, and the CPU may also be debugged through the I3C signal, which improve testing efficiency.

In some embodiments, the gating switch 3 includes:
a first 1-out-of-2 PCIe switch with a first terminal connected to first PCIe signal channels of two CPUs respectively and a second terminal connected to the USB controller 2, configured for connecting a first PCIe signal of one of the two CPUs to the USB controller 2 under the control of the control module.
a second 1-out-of-2 PCIe switch with a first terminal connected to second PCIe signal channels of two CPUs respectively and a second terminal connected to the BMC, configured for connecting a second PCIe signal of one of the two CPUs to the BMC under the control of the control module.
a 2-out-of-2 logic switch, with a first terminal connected to clock signals of two CPUs respectively and a second terminal connected to the USB controller 2 and the BMC respectively, configured for sending the clock signals of the two CPUs to the USB controller 2 and the BMC respectively.

In some embodiments of the present application, the gating switch 3 includes two 1-out-of-2 PCIe switches and one 2-out-of-2 logic switch, which has a simple structure and low cost.

Of course, the gating switch 3 may also be of other structures.

In some embodiments, the server management system further includes a third USB interface connected to the USB controller 2.

The USB controller 2 is configured for performing mutual conversion between the USB signal and the PCIe signal, so as to achieve communication between the CPU connected to the gating switch 3 and the first USB interface 4 and the third USB interface respectively.

Considering that in addition to the keyboard and mouse, the server is also required to connect to more USB devices. Therefore, a plurality of USB interfaces may be provided. The first USB interface 4 may be an interface of USB2.0 protocol, and the third USB interface may be an interface of USB3.0 or higher protocol, so as to improve user experience.

In some embodiments, the control module is an FPGA.

The FPGA has the advantages of small size, high performance and low cost.

Of course, in addition to the FPGA, the control module may also be of other types.

In some embodiments, the trusted root security management apparatus includes:
a trusted root security management module Cerberus connected to two CPUs and the BMC respectively and configured for providing a verified startup program for the CPUs and the BMC during the power-on phase of the server;
a first CPU Flash configured for storing a startup program of one of the CPUs;
a second CPU Flash configured for storing a startup program of the other CPU;
a BMC Flash configured for storing a startup program of the BMC.

Cerberus is an ARM processing-based trusted root security management module, provides multiple SPI interfaces externally, and may complete the check and recovery of the CPU, the BMC and other chips during the power-on phase of the server. The Cerberus solution avoids the stacking of logic switches in the PFR solution and reduces the difficulty of PCB design, and also greatly reduces the difficulty of logic development and improves production efficiency.

Of course, in addition to the above structure, the trust root security management apparatus may also be of other types.

In some embodiments, the present application also provides a server including the server management system in the above embodiments.

For an introduction to the server provided in some embodiments of the present application, please refer to the above embodiments of the server management system.

Each embodiment in this specification is described in a progressive manner, each embodiment focuses on the difference from other embodiments, and the same and similar parts of each embodiment may be referred to each other. It should also be noted that relational terms herein such as first and second, etc., are used merely to distinguish one entity or operation from another entity or operation, and do not necessarily require or imply there is any such relationship or order between these entities or operations. Furthermore, the terms "including", "comprising" or any variations thereof are intended to embrace a non-exclusive inclusion, such that a process, method, article, or terminal device including a plurality of elements includes not only those elements but also includes other elements not expressly listed, or also includes elements inherent to such a process, method, article, or device. In the absence of further limitation, an element defined by the phrase "including a ..." does not exclude the presence of additional identical element in the process, method, article, or terminal device.

## Claims

1. A server management system, comprising:
a gating switch (3);
a first USB interface (4);
two CPUs of a server;
a baseboard management control apparatus (1) configured for receiving a PCIe signal sent by one of the two CPUs through the gating switch (3), sending a keyboard and mouse instruction received through a first USB interface (4) to the one of the two CPUs connected to the gating switch (3), and assisting the one of the two CPUs connected to the gating switch (3) in startup;
a USB controller (2) connected to the baseboard management control apparatus (1) and configured for performing mutual conversion between a USB signal and a PCIe signal, so that communication between the one of the two CPUs connected to the gating switch (3) and the first USB interface (4) is implemented;
the gating switch (3) connected to the two CPUs, the baseboard management control apparatus (1) and the USB controller (2) respectively, and configured for connecting a set of PCIe signals of a designated one of the two CPUs to the baseboard management control apparatus (1) and connecting the other set of PCIe signals to the USB controller (2); and
the first USB interface (4) connected to the baseboard management control apparatus (1) and the USB controller (2) respectively,
**characterized in that** the baseboard management control apparatus (1) comprises:
a baseboard management controller connected to an enhanced serial peripheral interface of the one of the two CPUs and configured for receiving the PCIe signal sent by the one of the two CPUs through the gating switch (3), sending the keyboard and mouse instruction received through the first USB interface (4) to the one of the two CPUs connected to the gating switch (3), and receiving startup information sent by the one of the two CPUs through its own enhanced serial peripheral interface;
a control module connected to the baseboard management controller, an enhanced serial peripheral interface of the other of the two CPUs and the gating switch (3) respectively, and configured for processing the startup information sent by the other of the two CPUs through the enhanced serial peripheral interface by using a preset program, and controlling a state of the gating switch (3); and
a trusted root security management apparatus connected to the two CPUs and the baseboard management controller respectively, and configured for providing a verified startup program for the one of the two CPUs and the baseboard management controller during a power-on phase of the server.

2. The system according to claim 1, wherein the server management system further comprises a mainboard, the control module is further connected to a low voltage differential signal LVDS interface of the mainboard;
the control module is further configured for decoupling an LVDS signal coupled from a plurality of designated types of low-speed signals sent by the mainboard and sending it to the baseboard management controller, and decoupling an LDVS signal coupled from a plurality of designated types of low-speed signals sent by the baseboard management controller and sending it to the mainboard.

3. The system according to claim 2, wherein the server management system further comprises:
a protocol conversion apparatus connected to a universal asynchronous receiver/transmitter UART interface of the baseboard management controller and configured for performing conversion between a USB protocol and a UART protocol;
a second USB interface connected to the protocol conversion apparatus; and
the baseboard management controller further configured for outputting a UART signal received from the control module from the UART interface, and sending the UART signal sent by the protocol conversion apparatus to the control module.

4. The system according to claim 3, wherein the control module is further connected to an I3C interface of the CPU; and
the control module is further configured for:
connecting an improved inter integrated circuit I3C signal of the CPU to the baseboard management controller, so that the baseboard management controller debugs the CPU through the I3C signal.

5. The system according to claim 1, wherein the gating switch (3) comprises:
a first one-out-of-two PCIe switch with a first terminal connected to first PCIe signal channels of the two CPUs respectively and a second terminal connected to the USB controller (2), configured for connecting a first PCIe signal of one of the two CPUs to the USB controller (2) under control of the control module;
a second one-out-of-two PCIe switch with a first terminal connected to second PCIe signal channels of the two CPUs respectively and a second terminal connected to the baseboard management controller, configured for connecting a second PCIe signal of one of the two CPUs under the control of the control module; and
a two-out-of-two switch with a first terminal connected to clock signals of the two CPUs respectively and a second terminal connected to the USB controller (2) and the baseboard management controller respectively, configured for sending the clock signals of the two CPUs to the USB controller (2) and the baseboard management controller respectively.

6. The system according to claim 1, wherein the server management system further comprises a third USB interface connected to the USB controller (2); and
the USB controller (2) is configured for performing mutual conversion between the USB signal and the PCIe signal, so that communication between the CPU connected to the gating switch (3) and the first USB interface (4) and the third USB interface respectively is implemented.

7. The system according to any one of claims 1 to 6, wherein the trusted root security management apparatus comprises:
a trusted root security management module Cerberus, connected to two CPUs and the baseboard management controller respectively, and configured for providing a verified startup program for the CPUs and the baseboard management controller during a power-on phase of the server;
a first CPU Flash configured for storing a startup program of one of the CPUs;
a second CPU Flash configured for storing a startup program of the other CPU; and
a baseboard management controller Flash configured for storing a startup program of the baseboard management controller.

8. The system according to claim 1, wherein the gating switch (3) is configured for connecting two PCIe buses of a CPU which operates currently to the baseboard management control apparatus (1) and the USB controller (2) respectively.

9. The system according to claim 1, wherein the baseboard management control apparatus (1) is configured for providing a verified startup program for a CPU during a startup phase of the server.

10. The system according to claim 1, wherein the control module is configured for controlling a state of the gating switch (3) based on an instruction sent by the baseboard management controller.

11. A server, comprising the server management system according to any one of claims 1 to 10.

12. The server according to claim 11, wherein two PCIe bus at each of two CPUs of the server are connected to the server management system.

13. The server according to claim 11, wherein channels of four PCIe buses at two CPUs of the server are uniformly controlled by the gating switch (3) in the server management system.

14. The server according to claim 11, wherein a CPU in the server sends a PCIe signal through a PCIe bus connected to the baseboard management control apparatus (1) in the server management system.

## Patentansprüche

1. Ein Serververwaltungssystem, umfassend:
einen Gating-Schalter (3);
eine erste USB-Schnittstelle (4);
zwei CPUs eines Servers;
eine Baseboard Management Control-Vorrichtung (1), die dazu eingerichtet ist, dass sie ein von einer der beiden CPUs über den Gating-Schalter (3) gesendetes PCle-Signal empfängt, eine über eine erste USB-Schnittstelle (4) empfangene Tastatur- und Mausanweisung an die eine der beiden mit dem Gating-Schalter (3) verbundenen CPUs sendet und die eine der beiden mit dem Gating-Schalter (3) verbundenen CPUs beim Hochfahren unterstützt;
einen USB-Controller (2), der mit der Baseboard Management Control-Vorrichtung (1) verbunden ist und dazu eingerichtet ist, dass er eine gegenseitige Umwandlung zwischen einem USB-Signal und einem PCle-Signal ausführt, sodass eine Kommunikation zwischen der einen der beiden CPUs, die mit dem Gating-Schalter (3) verbunden ist, und der ersten USB-Schnittstelle (4) implementiert wird,
wobei der Gating-Schalter (3) mit den beiden CPUs, der Baseboard Management Control-Vorrichtung (1) und dem USB-Controller (2) verbunden ist und dazu eingerichtet ist, dass er einen Satz von PCle-Signalen einer bestimmten der beiden CPUs mit der Baseboard Management Control-Vorrichtung (1) verbindet und den anderen Satz von PCle-Signalen mit dem USB-Controller (2) verbindet; und
die erste USB-Schnittstelle (4) jeweils mit der Baseboard Management Control-Vorrichtung (1) sowie dem USB-Controller (2) verbunden ist,
**dadurch gekennzeichnet, dass** die Baseboard Management Control-Vorrichtung (1) umfasst:
einen Baseboard Management Controller, der mit einer erweiterten seriellen Peripherieschnittstelle einer der beiden CPUs verbunden ist und dazu eingerichtet ist, dass er das von einer der beiden CPUs über den Gating-Schalter (3) gesendete PCle-Signal empfängt, dass er die über die erste USB-Schnittstelle (4) empfangene Tastatur- und Mausbefehle an eine der beiden mit dem Gating-Schalter (3) verbundenen CPUs sendet und dass er Hochfahr-Informationen, die von einer der beiden CPUs über ihre eigene erweiterte serielle Peripherieschnittstelle gesendet werden, empfängt;
ein Steuermodul, das jeweils mit dem Baseboard Management Controller, einer erweiterten seriellen Peripherieschnittstelle der anderen der beiden CPUs und dem Gating-Schalter (3) verbunden ist und dazu eingerichtet ist, dass es die von der anderen der beiden CPUs über die erweiterte serielle Peripherieschnittstelle gesendeten Hochfahr-Informationen unter Verwendung eines voreingestellten Programms verarbeitet und einen Zustand des Gating-Schalters (3) steuert; und
eine vertrauenswürdige Root-Sicherheitsverwaltungsvorrichtung, die jeweils mit den beiden CPUs und der Baseboard Management Control-Vorrichtung verbunden ist und dazu eingerichtet ist, dass sie während einer Einschaltphase des Servers ein verifiziertes Hochfahr-Programm für eine der beiden CPUs und den Baseboard Management Control-Vorrichtung bereitstellt.

2. Das System gemäß Anspruch 1, wobei das Server-Management-System ferner umfasst:
ein Mainboard,
wobei das Steuermodul ferner mit einer LVDS-Schnittstelle des Mainboards verbunden ist;
das Steuermodul ferner dazu eingerichtet ist, dass es ein LVDS-Signal, das von einer Vielzahl von bestimmten Arten von low-speed Signalen, die von dem Mainboard gesendet werden, gekoppelt ist, entkoppelt und an den Baseboard Management Controller sendet, und dass es ein LDVS-Signal, das von einer Vielzahl von bestimmten Arten von low-speed Signalen, die vom Baseboard Management Controller gesendet werden, gekoppelt ist, entkoppelt und an das Mainboard sendet.

3. Das System gemäß Anspruch 2, wobei das Server-Management-System ferner umfasst:
eine Protokollkonvertierungs-Vorrichtung, die mit einer universellen asynchronen Empfänger-/Sender-UART-Schnittstelle der Baseboard Management Control-Vorrichtung verbunden und zum Ausühren einer Konvertierung zwischen einem USB-Protokoll und einem UART-Protokoll eingerichtet ist, wobei eine zweite USB-Schnittstelle mit der Protokollkonvertierungs-Vorrichtung verbunden ist; und
wobei die Baseboard Management Control-Vorrichtung ferner zum Ausgeben eines vom Steuermodul empfangenen UART-Signals von der UART-Schnittstelle und zum Senden des von der Protokollkonvertierungs-Vorrichtung gesendeten UART-Signals an das Steuermodul eingerichtet ist.

4. Das System gemäß Anspruch 3, wobei das Steuermodul ferner mit einer I3C-Schnittstelle der CPU verbunden ist; und
das Steuermodul ferner dazu eingerichtet ist, dass es ein verbessertes Inter-Integrated-Circuit-I3C-Signal der CPU mit dem Baseboard Management Controller verbindet, so dass der Baseboard Management Controller die CPU über das I3C-Signal debuggt.

5. Das System gemäß Anspruch 1, wobei der Gating-Schalter (3) umfasst:
einen ersten One-out-of-two-PCIe-Schalter mit einem ersten Anschluss, der jeweils mit ersten PCle-Signalkanälen der beiden CPUs verbunden ist, und einem zweiten Anschluss, der mit dem USB-Controller (2) verbunden ist, der dazu eingerichtet ist, dass er ein erstes PCle-Signal einer der beiden CPUs unter der Steuerung des Steuermoduls mit dem USB-Controller (2) verbindet;
einen zweiten One-out-of-two-PCIe-Schalter mit einem ersten Anschluss, der mit zweiten PCle-Signalkanälen der beiden CPUs verbunden ist, und einem zweiten Anschluss, der mit dem Baseboard-Management-Controller verbunden ist, der dazu eingerichtet ist, dass er ein zweites PCle-Signal einer der beiden CPUs unter der Steuerung des Steuermoduls verbindet; und
einen Two-out-of-two-Schalter mit einem ersten Anschluss, der jeweils mit den Taktsignalen der beiden CPUs verbunden ist, und einem zweiten Anschluss, der jeweils mit dem USB-Controller (2) und dem Baseboard-Management-Controller verbunden ist, der dazu eingerichtet ist, dass er die Taktsignale der beiden CPUs jeweils an den USB-Controller (2) und den Baseboard-Management-Controller sendet.

6. Das System gemäß Anspruch 1, wobei das Server-Managementsystem umfasst:
eine dritte USB-Schnittstelle, die mit dem USB-Controller (2) verbunden ist; und der USB-Controller (2) dazu eingerichtet ist, dass er eine gegenseitige Umwandlung zwischen dem USB-Signal und dem PCle-Signal ausführt, sodass eine Kommunikation zwischen jeweils der mit dem Gating-Schalter (3) verbundenen CPU und der ersten USB-Schnittstelle (4) sowie der dritten USB-Schnittstelle implementiert wird.

7. Das System gemäß einem der Ansprüche 1 bis 6, wobei die vertrauenswürdige Root-Sicherheitsverwaltungsvorrichtung umfasst:
ein vertrauenswürdiges Root-Sicherheitsverwaltungsmodul Cerberus, das mit jeweils zwei CPUs und der Baseboard Management Control-Vorrichtung verbunden ist und dazu eingerichtet ist, dass es während einer Einschaltphase des Servers ein verifiziertes Hochfahr-Programm für die CPUs und die Baseboard Management Control-Vorrichtung bereitstellt;
einen ersten CPU-Flash, der zum Speichern eines Hochfahr-Programms einer der CPUs eingerichtet ist;
einen zweiten CPU-Flash, der zum Speichern eines Hochfahr-Programms der anderen CPU eingerichtet ist; und
einen Baseboard Management Control Vorrichtungs-Flash, der zum Speichern eines Hochfahr-Programms der Baseboard Management Control-Vorrichtung eingerichtet ist.

8. Das System gemäß Anspruch 1, wobei der Gating-Schalter (3) dazu eingerichtet ist, dass er zwei PCle-Busse einer aktuell arbeitenden CPU jeweils mit der Baseboard Management Control-Vorrichtung (1) und dem USB-Controller (2) verbindet.

9. Das System gemäß Anspruch 1, wobei die Baseboard Management Control-Vorrichtung (1) dazu eingerichet ist, dass sie während einer Hochfahr-Phase des Servers ein verifiziertes Hochfahr-Programm für eine CPU bereitstellt.

10. Das System gemäß Anspruch 1, wobei das Steuermodul dazu eingerichtet ist, dass es einen Zustand des Gating-Schalters (3) auf der Grundlage einer vom Baseboard-Management-Controller gesendeten Anweisung steuert.

11. Server, der das Serververwaltungssystem gemäß einem der Ansprüche 1 bis 10 umfasst.

12. Der Server gemäß Anspruch 11, wobei zwei PCle-Busse an jeder der beiden CPUs des Servers mit dem Serververwaltungssystem verbunden sind.

13. Der Server gemäß Anspruch 11, wobei Kanäle von vier PCle-Bussen an zwei CPUs des Servers durch den Gating-Schalter (3) im Server-Managementsystem einheitlich gesteuert werden.

14. Der Server gemäß Anspruch 11, wobei eine CPU im Server ein PCle-Signal über einen PCle-Bus sendet, der mit der Baseboard Management Control-Vorrichtung (1) im Server-Managementsystem verbunden ist.

## Revendications

1. Système de gestion de serveur, comprenant :
un commutateur de grille (3) ;
une première interface USB (4) ;
deux CPU d'un serveur ;
un appareil de commande de gestion de carte de base (1) configuré pour recevoir un signal PCIe envoyé par l'une des deux CPU via le commutateur de grille (3), envoyer une instruction de clavier et de souris reçue via une première interface USB (4) à l'une des deux CPU connectées au commutateur de grille (3), et aider ladite une des deux CPU connectées au commutateur de grille (3) au démarrage ;
un contrôleur USB (2) connecté à l'appareil de commande de gestion de carte de base (1) et configuré pour effectuer une conversion mutuelle entre un signal USB et un signal PCIe, de sorte que la communication entre ladite une des deux CPU connectées au commutateur de grille (3) et la première interface USB (4) soit mise en œuvre ;
le commutateur de grille (3) connecté respectivement aux deux CPU, à l'appareil de commande de gestion de carte de base (1) et au contrôleur USB (2), et configuré pour connecter un ensemble de signaux PCIe d'une CPU désignée parmi les deux CPU à l'appareil de commande de gestion de carte de base (1) et pour connecter l'autre ensemble de signaux PCIe au contrôleur USB (2) ; et
la première interface USB (4) connectée respectivement à l'appareil de commande de gestion de carte de base (1) et au contrôleur USB (2),
**caractérisé en ce que** l'appareil de commande de gestion de carte de base (1) comprend :
un contrôleur de gestion de carte de base connecté à une interface périphérique série améliorée de ladite une des deux CPU et configuré pour recevoir le signal PCIe envoyé par ladite une des deux CPU via le commutateur de grille (3), envoyer l'instruction de clavier et de souris reçue via la première interface USB (4) à ladite une des deux CPU connectées au commutateur de grille (3), et recevoir les informations de démarrage envoyées par ladite une des deux CPU via sa propre interface périphérique série améliorée ;
un module de commande connecté au contrôleur de gestion de carte de base, à une interface périphérique série améliorée de l'autre des deux CPU et au commutateur de grille (3) respectivement, et configuré pour traiter les informations de démarrage envoyées par l'autre des deux CPU via l'interface périphérique série améliorée en utilisant un programme prédéfini, et pour contrôler un état du commutateur de grille (3) ; et
un appareil de gestion de sécurité racine fiable connecté respectivement aux deux CPU et au contrôleur de gestion de carte de base, et configuré pour fournir un programme de démarrage vérifié pour ladite une des deux CPU et le contrôleur de gestion de carte de base pendant une phase de mise sous tension du serveur.

2. Système selon la revendication 1, dans lequel le système de gestion de serveur comprend en outre une carte mère, le module de commande est en outre connecté à une interface de signal différentiel basse tension LVDS de la carte mère ;
le module de commande est en outre configuré pour découpler un signal LVDS couplé à partir d'une pluralité de types désignés de signaux à faible vitesse envoyés par la carte mère et l'envoyer au contrôleur de gestion de carte de base, et pour découpler un signal LDVS couplé à partir d'une pluralité de types désignés de signaux à faible vitesse envoyés par le contrôleur de gestion de carte de base et l'envoyer à la carte mère.

3. Système selon la revendication 2, dans lequel le système de gestion de serveur comprend en outre :
un appareil de conversion de protocole connecté à une interface récepteur/émetteur asynchrone universel UART du contrôleur de gestion de carte de base et configuré pour effectuer une conversion entre un protocole USB et un protocole UART ;
une deuxième interface USB connectée à l'appareil de conversion de protocole ; et
le contrôleur de gestion de carte de base étant en outre configuré pour émettre un signal UART reçu du module de commande à partir de l'interface UART, et envoyer le signal UART envoyé par l'appareil de conversion de protocole au module de commande.

4. Système selon la revendication 3, dans lequel le module de commande est en outre connecté à une interface I3C de la CPU ; et
le module de commande est en outre configuré pour :
connecter un signal I3C inter-circuits intégrés amélioré de la CPU au contrôleur de gestion de carte de base, de sorte que le contrôleur de gestion de carte de base débogue la CPU via le signal I3C.

5. Système selon la revendication 1, dans lequel le commutateur de grille (3) comprend :
un premier commutateur PCIe un-sur-deux avec une première borne connectée aux premiers canaux de signal PCIe des deux CPU respectivement et une deuxième borne connectée au contrôleur USB (2), configuré pour connecter un premier signal PCIe de l'un des deux CPU au contrôleur USB (2) sous le contrôle du module de commande ;
un deuxième commutateur PCIe un-sur-deux avec une première borne connectée à des deuxièmes canaux de signal PCIe des deux CPU respectivement et une deuxième borne connectée au contrôleur de gestion de carte de base, configuré pour connecter un deuxième signal PCIe de l'un des deux CPU sous le contrôle du module de commande ; et
un commutateur deux-sur-deux avec une première borne connectée à des signaux d'horloge des deux CPU respectivement et une deuxième borne connectée au contrôleur USB (2) et au contrôleur de gestion de carte de base respectivement, configuré pour envoyer les signaux d'horloge des deux CPU au contrôleur USB (2) et au contrôleur de gestion de carte de base respectivement.

6. Système selon la revendication 1, dans lequel le système de gestion de serveur comprend en outre une troisième interface USB connectée au contrôleur USB (2) ; et
le contrôleur USB (2) est configuré pour effectuer une conversion mutuelle entre le signal USB et le signal PCIe, de sorte que la communication entre la CPU connecté au commutateur de grille (3) et la première interface USB (4) et la troisième interface USB respectivement est mise en œuvre.

7. Système selon l'une quelconque des revendications 1 à 6, dans lequel l'appareil de gestion de sécurité racine fiable comprend :
un module de gestion de sécurité racine fiable Cerberus, connecté respectivement à deux CPU et au contrôleur de gestion de carte de base, et configuré pour fournir un programme de démarrage vérifié pour les CPU et le contrôleur de gestion de carte de base pendant une phase de mise sous tension du serveur ;
une première mémoire flash CPU configurée pour stocker un programme de démarrage de l'un des CPU ;
une deuxième mémoire flash CPU configurée pour stocker un programme de démarrage de l'autre CPU ; et
une mémoire flash de contrôleur de gestion de carte de base configurée pour stocker un programme de démarrage du contrôleur de gestion de carte de base.

8. Système selon la revendication 1, dans lequel le commutateur de grille (3) est configuré pour connecter deux bus PCIe d'une CPU qui fonctionne actuellement respectivement à l'appareil de commande de gestion de carte de base (1) et au contrôleur USB (2).

9. Système selon la revendication 1, dans lequel l'appareil de commande de gestion de carte de base (1) est configuré pour fournir un programme de démarrage vérifié pour une CPU processeur pendant une phase de démarrage du serveur.

10. Système selon la revendication 1, dans lequel le module de commande est configuré pour commander un état du commutateur de grille (3) sur la base d'une instruction envoyée par le contrôleur de gestion de carte de base.

11. Serveur comprenant le système de gestion de serveur selon l'une quelconque des revendications 1 à 10.

12. Serveur selon la revendication 11, dans lequel deux bus PCIe au niveau de chacune de deux CPU du serveur sont connectés au système de gestion de serveur.

13. Serveur selon la revendication 11, dans lequel des canaux de quatre bus PCIe au niveau de deux CPU du serveur sont contrôlés de manière uniforme par le commutateur de grille (3) dans le système de gestion de serveur.

14. Serveur selon la revendication 11, dans lequel une CPU dans le serveur envoie un signal PCIe via un bus PCIe connecté à l'appareil de commande de gestion de carte de base (1) dans le système de gestion de serveur.
